Europäisches Patentamt

European Patent Office

Office européen des brevets

(11) Numéro de publication: **0 493 235 A1**

## DEMANDE DE BREVET EUROPEEN

(21) Numéro de dépôt: **91403508.4**

(22) Date de dépôt: **20.12.91**

(51) Int. Cl.5: **H01S 3/094**, H01S 3/042, H01S 3/23

(30) Priorité: **28.12.90 FR 9016431**

(43) Date de publication de la demande:
**01.07.92 Bulletin 92/27**

(84) Etats contractants désignés:
**DE GB IT**

(71) Demandeur: **THOMSON-CSF**
**51, Esplanade du Général de Gaulle**
**F-92800 Puteaux(FR)**

(72) Inventeur: **Pocholle, Jean-Paul**
**THOMSON-CSF, SCPI, Cédex 67**
**F-92045 Paris la Défense(FR)**
Inventeur: **Papuchon, Michel**
**THOMSON-CSF, SCPI, Cédex 67**
**F-92045 Paris la Défense(FR)**

(74) Mandataire: **Guérin, Michel et al**
**THOMSON-CSF SCPI**
**F-92045 PARIS LA DEFENSE CEDEX 67(FR)**

(54) **Laser solide de grande énergie.**

(57) L'invention concerne un laser solide de grande énergie utilisant un nouveau dispositif de pompage optique, comprenant des fibres optiques connectées d'une part à des sources optiques (Dh) de forte puissance, d'autre part couplées au milieu actif (L). Dans ce dispositif la surface de couplage est déplacée grâce à des moyens mécaniques (M) permettant le déplacement des fibres optiques et l'évacuation de chaleur liée à un pompage de forte puissance étant ainsi favorisée, permet d'utiliser un tel laser comme arme laser.

FIG.1

EP 0 493 235 A1

Le domaine de l'invention est celui des lasers solides de puissance pompés par des sources optiques, telles que les diodes lasers.

Actuellement, l'obtention de forts niveaux d'énergie à partir de faisceaux lasers permet d'envisager l'emploi de ceux-ci en tant que laser industriel, arme laser ou bien encore pour pomper un laser X.

De façon générale l'effet laser met en jeu une émission stimulée correspondant à la libération de photons, par retombée à un niveau d'énergie inférieur. Dans le cas de cette émission stimulée les rayonnements inducteurs et induits ont la même phase, peuvent avoir la même direction et la même polarisation et tout se passe donc comme s'il y avait véritable amplification de lumière. Cependant un rayonnement arrivant sur un milieu donné a une probabilité extrêmement plus importante d'être absorbé que de provoquer une émission stimulée ; pour générer l'émission stimulée il est nécessaire d'introduire une inversion de population entre état fondamental et état excité, au sein du milieu actif, cette inversion de population est provoquée par une excitation extérieure appelée habituellement pompage.

L'amplificateur laser est donc composé d'un matériau actif pouvant générer une émission stimulée, d'une source de pompage ; si de plus cet amplificateur est placé dans une cavité résonnante, il devient générateur de rayonnement intense.

Dans le cas de lasers solides, généralement constitués par des verres ou des cristaux, dopés avec des ions qui par la position de leurs niveaux d'énergie sont responsables de l'inversion de population, il est possible d'effectuer le pompage optiquement contrairement aux lasers à gaz qui sont pompés par décharge électrique en raison de leur faible absorption.

Plus précisément les milieux actifs de lasers solides peuvent être du rubis, cristal d'alumine transparente dans lequel sont incorporés des ions de chrome trivalent ou, du verre au néodyme dopé avec des tons $Nd^{3+}$ ou bien encore de grenat d'yttrium et d'aluminium (appelé YAG) également dopé avec des tons $Nd^{3+}$ qui présente l'intérêt d'avoir un seuil d'inversion de population faible. Il s'agit en effet d'un système à quatre niveaux d'énergie entre lesquels l'émission radiative est favorisée par la présence d'une émission non radiative de plus faible énergie qui évite la saturation entre les états excités.

Pour ces lasers solides, les principales sources de pompage employées ont été des lampes à éclairs (flash) émettant dans de nombreuses directions et dans une bande spectrale large. L'énergie efficace de pompage ne représente dans ce cas qu'une faible partie de l'énergie dissipée par la flash.

On a notablement amélioré le rendement de pompage en utilisant des diodes lasers dont l'émission est centrée sur la bande d'absorption de l'ion dopant.

Cependant dans le cas de lasers solides de grande énergie (plusieurs kw), il est indispensable de générer une puissance de pompage très élevée (plusieurs dizaines de kw/cm²).

Ceci entraîne des problèmes majeurs d'échauffement tant au niveau de diodes lasers qu'au niveau du matériau solide actif, devant être impérativement résolus au mieux pour envisager des lasers solides de très forte énergie capables de délivrer plusieurs kilowatts.

En effet, le rendement de conversion d'énergie électrique en énergie optique ne dépasse guère 40 % au niveau des diodes lasers et le rendement de conversion d'énergie optique de pompage en énergie optique radiative au niveau du matériau actif n'est guère supérieur à 30 %. L'énergie non convertie au niveau du laser solide correspond à une absorption importante qui entraîne un échauffement notable du matériau.

C'est pourquoi l'obtention de forts niveaux d'énergie impose en premier lieu de définir une géométrie adaptée et de réaliser un choix quant à la nature de la matrice laser en tenant compte de ses propriétés thermiques. Le matériau employé doit présenter de faibles valeurs du coefficient d'expansion thermique et une forte conductivité thermique. De faibles coefficients d'expansion thermique permettent de ne pas induire des contraintes entre la surface et le centre du milieu laser durant l'échauffement de celui-ci, ces contraintes pouvant non seulement aboutir à la création de défauts à caractère irréversible (fracture du matériau), mais encore induire par effet photoélastique des modifications inhomogènes d'indice du milieu. Une forte conductivité thermique permet de dissiper efficacement la chaleur vers la surface et donc de diminuer la température au centre de l'échantillon.

Pour pallier les problèmes d'échauffements, une solution déjà envisagée a été de déplacer le barreau constituant le milieu actif solide par rapport à une lampe flash favorisant ainsi l'évacuation de la chaleur ; cependant tout déplacement du barreau est susceptible d'entraîner des instabilités de fonctionnement.

C'est pourquoi, la présente invention propose un nouveau dispositif de pompage optique d'un laser solide de grande énergie. Ce dispositif utilise des fibres optiques connectées d'une part à des sources optiques de forte puissance, d'autre part couplées au milieu actif solide, la surface de couplage ne représentant qu'une partie de la surface externe du laser et pouvant être déplacée devant cette surface externe grâce à la flexibilité des fibres rendues mobiles.

L'emploi de fibres optiques capable de véhiculer l'énergie de pompage permet de délocaliser les sources optiques de pompage et le laser solide et par là même leur dispositif respectif de refroidissement. Il permet de plus de réaliser une ou plusieurs sources de pompage compactes pouvant être mécaniquement bougées dans le temps par rapport à la surface du laser solide devant être excité. L'évacuation des calories au niveau du laser solide est favorisée par le déplacement de la ou des sources de pompage et renforcée par la circulation d'un flux chaloporteur autour du laser. Ces sources de pompage optiques sont constituées de préférence de diodes lasers capables de délivrer des puissances optiques très élevées.

L'invention sera mieux comprise et d'autres avantages apparaîtront à la lecture de la description qui va suivre, donnée à titre non limitatif et grâce aux figures annexées parmi lesquelles :

- la figure 1 représente le dispositif de pompage selon l'invention, d'un laser solide de géométrie plaque ;
- la figure 2 représente une source de pompage constituées de diodes lasers ;
- la figure 3 représente un laser solide de géométrie plaque et l'allure du mode incident se propageant dans le laser ;
- la figure 4 représente : un dispositif de pompage utilisant deux sources de pompage optique de part et d'autre d'une plaque laser (4a) ; les fibres optiques vues de dessus à différents instants (4b) ; le profil d'inversion de population en fonction du temps (4c) à un endroit donné de la plaque ;
- la figure 5 représente une plaque laser pompée avec plusieurs sources optiques de pompage pouvant être programmées dans le temps ;
- la figure 6 montre une structure cylindrique de laser solide, son mode de pompage optique et la circulation du gaz de refroidissement.

Différentes géométries peuvent être employées pour réaliser des lasers de puissance selon l'invention, elles sont de préférence de type plaques ou barreaux ou bien tubulaires. Le matériau actif est de préférence à base de verre ou de cristaux dopés avec des ions de terres rares ($Nd^{3+}$ par exemple).

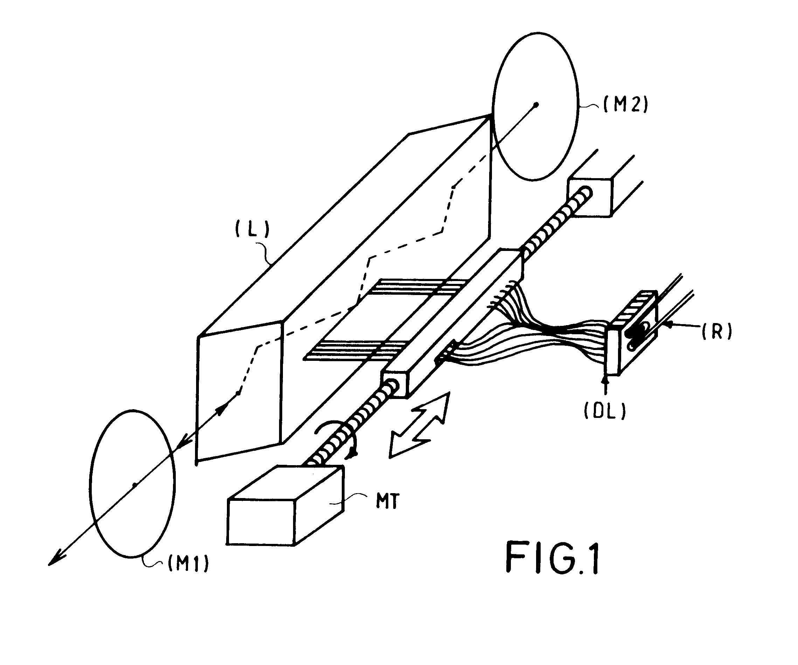

Il est placé dans une cavité résonante de préférence constituée par deux miroirs (M1) et (M2) perpendiculaires à l'axe du barreau ou de la plaque laser (L) (figure 1) et situés de part et d'autre du matériau laser. L'un au moins des deux miroirs est semi-transparent de façon à permettre la sortie du rayonnement incident amplifié, ces miroirs pouvant être directement les faces terminales du matériau actif.

Dans le cas d'une géométrie plaque les fibres optiques (F) reliées aux sources de pompage optique sont amenées sur la ou les surfaces de la plaque et peuvent être animées mécaniquement d'un déplacement longitudinal par rapport à l'axe de la cavité laser grâce à un moteur $M_T$. La vitesse de déplacement de l'énergie de pompage est régie par la constante de temps thermique du matériau de façon à maintenir une température homogène dans celui-ci.

Ceci peut être obtenu si la zone illuminée par le faisceau de fibres reste éclairée pendant un temps suffisamment bref pour ne pas faire monter excessivement la température du barreau et si cette zone est à nouveau illuminée (après un aller et retour du faisceau) seulement au bout d'un temps au moins égal à la constante de temps thermique du matériau actif. Cette constante de temps Cth est la mesure de la rapidité d'évacuation de la chaleur engendrée dans le matériau. Elle dépend bien sûr de la nature du matériau et en particulier de sa chaleur spécifique, de la conductivité thermique et de la nature de l'échange thermique. On effectuera donc un balayage d'une face de la plaque avec un faisceau de fibres dont la surface d'illumination et la vitesse de déplacement sont adaptées à cette constante de temps thermique. Le balayage peut s'effectuer avec un faisceau couvrant en un seul passage toute la hauteur de la plaque ; mais il peut aussi le faire en bandes successives, le faisceau de fibres couvrant une partie seulement de la hauteur de la plaque et des bandes successives étant couvertes à chaque passage du faisceau. Notons que la constante de temps thermique plus élevée dans le cas d'un verre dopé (par rapport à un cristal dopé du type YAG) autorise des déplacements plus lents.

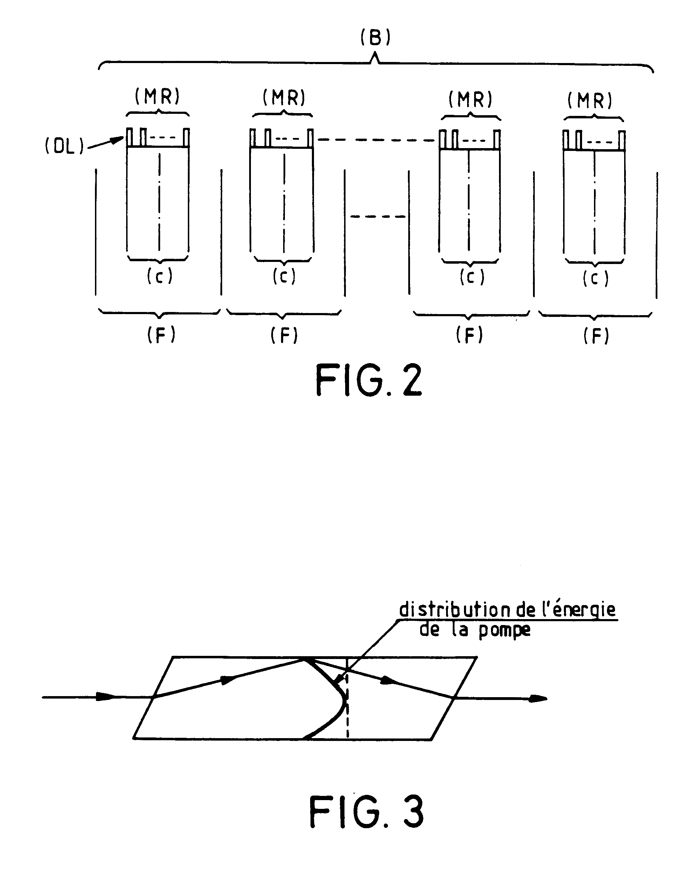

La figure 1 illustre l'invention dans le cas où un seul faisceau de fibres véhicule l'énergie de pompage. L'énergie thermique au niveau des diodes laser (DL) peut être dissipée à l'aide d'un radiateur (R), garantissant ainsi une stabilité spectrale de l'émission laser, alors qu'un fluide caloporteur permet l'évacuation partielle de calories au niveau des surfaces lasers pompées optiquement. Le pompage optique délivré de préférence par des diodes lasers peut atteindre une puissance de plusieurs dizaines de kw/cm². En effet on peut envisager de constituer la source de pompage optique à partir de barrettes (B) composées de réseaux (MR) de diodes multirubans (DL). Typiquement un réseau regroupe une dizaine de diodes élémentaires et présente une largeur totale comprise entre 100 et 150 $\mu$m. On peut donc utiliser une libre optique (F) de diamètre de coeur (C) 150 $\mu$m environ, l'espacement entre réseaux étant de l'ordre de 100 $\mu$m (figure 2). Sachant qu'une barrette peut contenir entre 20 et 30 réseaux de 10 rubans, il est possible de véhiculer l'énergie émise par une barrette par l'intermédiaire de faisceaux de fibres. Pour cela on peut utiliser une technique collective de prépositionnement des fibres optiques vis-à-vis des réseaux de diodes par gravure chimique de motifs en V dans du silicium. L'association d'un grand nombre de barrettes permet ainsi de réaliser une source de pompage compacte émise à partir de faisceaux de fibres.

A titre indicatif, 1000 barrettes de diodes lasers délivrant chacune 50 W en continu génèrent une puissance de pompe de 50 kw.

Avec une plaque laser en verre dopée Nd$^{3+}$ de dimensions 300 x 6 x 6 mm$^3$, il est possible d'obtenir un niveau de puissance laser à la longueur d'onde de 1,054 micron de 15 kw avec un rendement de pompage optique-optique de l'ordre de 30 % à partir d'une énergie de pompe de 50 kw à la longueur d'onde 0,808 micron, ce niveau de puissance laser dépendant toutefois du coefficient de couplage du miroir de sortie.

Notons que la plaque laser possède une épaisseur optimale liée au coefficient d'absorption du matériau à la longueur d'onde de pompe soit à 0,808 micron, puisque l'efficacité de l'énergie de pompe décroît exponentiellement le long de l'épaisseur.

Dans le cas d'une géométrie plaque, le cheminement optique du mode du faisceau lumineux à amplifier est de préférence un mode en zig-zag. On obtient ainsi un meilleur recouvrement du mode et des zones les plus intensément pompées (figure 3). Les extrémités de la plaque sont biseautées avec un angle de biseautage défini d'après la condition de Brewster pour assurer une réflexion totale à l'intérieur de la plaque et minimiser les pertes à la réflexion sur l'interface.

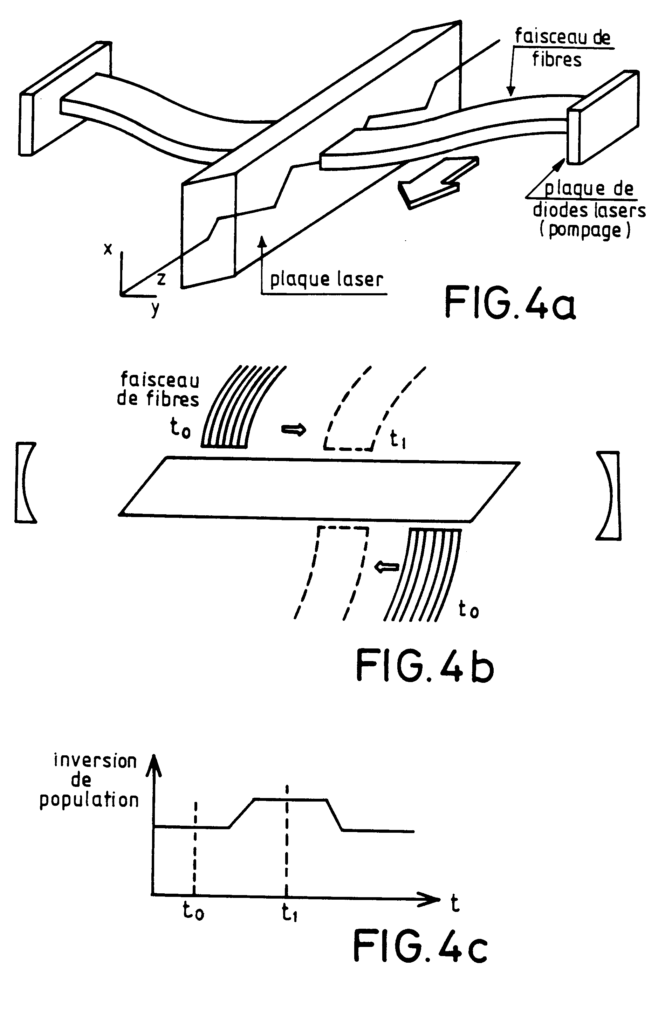

Il est également possible d'envisager plusieurs sources de pompage optique venant se coupler au milieu laser par plusieurs faisceaux de fibres. Ainsi un couplage de la pompe au milieu laser par l'intermédiaire de faisceaux de fibres sur les deux faces de la plaque (figure 4) peut être envisagé. En régime contrapropagatif où les déplacements des deux faisceaux se font en sens inverse il est possible de délivrer une puissance laser modulable suivant qu'il y a superposition spatiale des deux faisceaux de pompe situés de part et d'autre de la plaque, ou non.

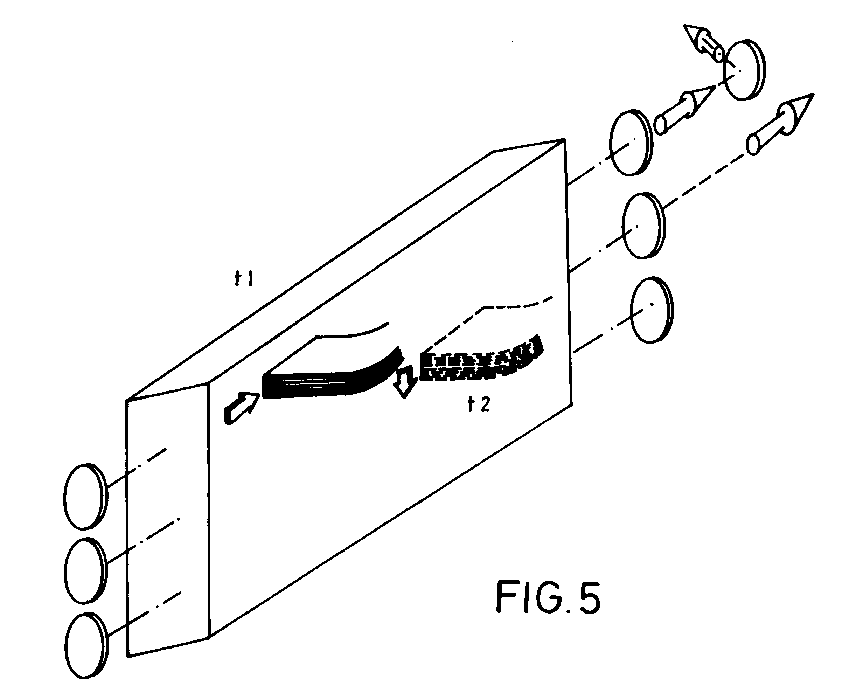

On peut aussi envisager la réalisation de multiples passages dans une plaque laser unique en pompant localement avec multiplexage spatial (figure 5). Cette architecture permet de disposer de plusieurs faisceaux lasers fixes (cavités) pompés à des moments différents par déplacement de la pompe le long de la plaque. Plusieurs miroirs placés à des hauteurs différentes peuvent alors être prévus pour définir plusieurs cavités résonnantes pouvant être excitées indépendamment les unes des autres. Avec un tel dispositif on peut envisager un poste de travail unique d'un ensemble de faisceaux pouvant être affectés à des tâches spécifiques en contrôlant par exemple le niveau de pompage (déterminé par le courant d'injection dans les diodes lasers). On minimise ainsi le coût d'une chaîne de lasers industriels. Enfin, ce concept de pompage mobile peut être étendu à des étapes d'amplifications optiques. Le déplacement du faisceau de fibres selon la hauteur de la plaque peut ou non être couplé à un déplacement en longueur selon l'axe de la cavité.

Dans une autre structure, on peut prévoir plusieurs cavités superposées selon la hauteur de la plaque et plusieurs ensembles de fibres optiques correspondant chacun à une surface de couplage optique respective, les surfaces de couplage étant associées chacune à une cavité respective pour constituer plusieurs faisceaux lasers activables individuellement.

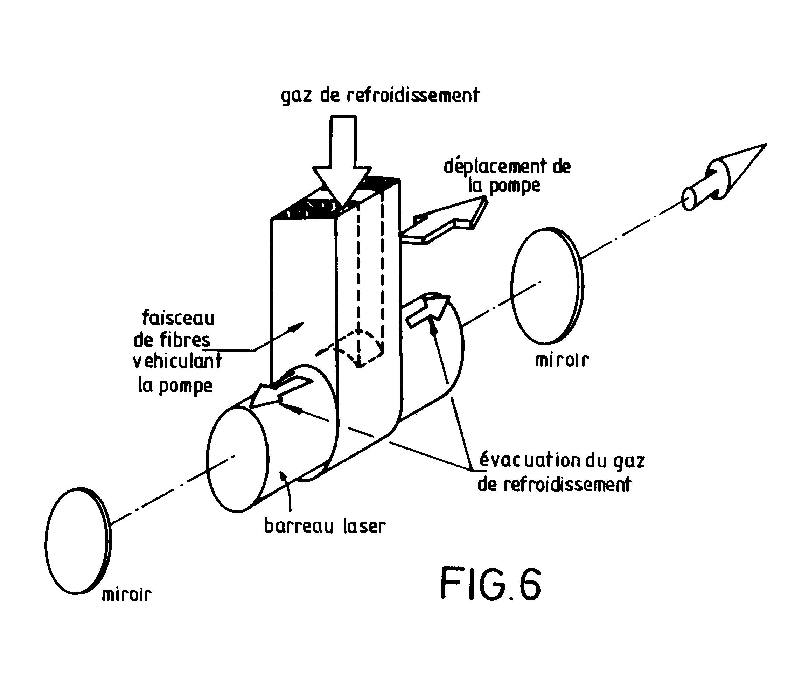

La géométrie plaque n'est pas la seule envisageable, en effet une structure cylindrique peut aussi générer des dispositifs intéressants. Dans cette configuration du milieu laser, la pompe peut être constituée d'une nappe de fibres optiques et disposée en couronne autour du cylindre avec déplacement longitudinal de celle-ci par rapport au cylindre (figure 6). Il est dans ce cas possible d'insérer un fluide de refroidissement au milieu du faisceau de fibres pour réaliser un échange thermique par convection transversale au niveau de l'ensemble du matériau laser.

Enfin, on peut prévoir une réalisation dans laquelle les extrémités de fibres optiques couplées à la surface externe de la plaque ou du barreau sont distribuées sur une large portion ou sur la totalité de cette surface, et que le déplacement des fibres optiques consiste en une oscillation de l'ensemble des extrémités de part et d'autre de leur point de repos. De cette manière, avec un très petit déplacement mécanique, on déplace la zone de pompage optique de chaque fibre ; on favorise donc l'évacuation de chaleur en évitant de pomper toujours au même endroit. A titre d'exemple, s'il y a 100 fibres réparties sur 1 cm$^2$, les extrémités de fibres sont espacées de 1 millimètre et un déplacement mécanique de 0,5 mm est possible pour tout le bloc de fibres.

**Revendications**

1.  Laser à milieu actif solide de grande énergie caractérisé en ce qu'il utilise un dispositif de pompage optique comprenant un ou plusieurs ensembles de fibres optiques, chaque ensemble de fibres étant connecté d'une part à des sources optiques, d'autre part couplé au milieu actif solide, la surface de couplage ne représentant qu'une portion de la surface externe du milieu actif et des moyens pour déplacer ladite surface de couplage sur la surface externe par l'intermédiaire d'un déplacement des fibres optiques.

2. Laser selon la revendication 1, caractérisé en ce que les sources optiques de pompage sont des diodes lasers.

3. Laser selon la revendication 2, caractérisé en ce que les sources optiques sont constituées de barrettes composées de réseaux de diodes multirubans, chaque réseau étant connecté à une libre optique et l'énergie de pompage étant véhiculée par l'ensemble des fibres.

4. Laser selon l'une des revendications 1 à 3, caractérisé en ce que le milieu actif solide a une géométrie plaque et que les faisceaux de fibres se déplacent longitudinalement par rapport à l'axe d'une cavité contenant le milieu actif.

5. Laser selon la revendication 4, caractérisé en ce qu'un fluide de refroidissement circule le long de la surface externe pompée optiquement.

6. Laser selon l'une des revendications 1 à 3, caractérisé en ce que le milieu actif solide a une géométrie cylindrique et que la source optique de pompage est constituée d'une nappe de fibres optiques disposées en couronne autour du cylindre avec déplacement longitudinal de celle-ci par rapport au cylindre.

7. Laser selon la revendication 6, caractérisé en ce qu'un fluide de refroidissement est inséré au milieu du faisceau de fibres, générant un échange thermique par convection transversale au niveau de l'ensemble du matériau laser.

8. Laser selon l'une des revendications 1 à 5, caractérisé en ce que la surface de couplage entre les fibres optiques et la surface externe du milieu actif est déplaçable le long de la hauteur de cette surface externe, transversalement à l'axe d'une cavité contenant le milieu actif solide.

9. Laser selon la revendication 8, caractérisé en ce que plusieurs cavités résonnantes superposées sont définies le long de la hauteur du milieu actif et en ce que la surface de couplage est déplaçable en hauteur pour activer au choix l'une de ces cavités, constituant ainsi plusieurs faisceaux lasers distincts activables individuellement.

10. Laser selon l'une des revendications 1 à 5, caractérisé en ce que plusieurs cavités résonnantes superposées sont définies le long de la hauteur du milieu actif, et en ce que plusieurs ensembles de fibres optiques sont prévus, correspondant chacun à une surface de couplage optique respective, les surfaces de couplage étant associées chacune à une cavité pour constituer plusieurs faisceaux lasers activables individuellement.

FIG.1

EP 0 493 235 A1

(B)

(MR)      (MR)      (MR)      (MR)

(DL)

(c)       (c)       (c)       (c)

(F)       (F)       (F)       (F)

# FIG. 2

distribution de l'énergie
de la pompe

# FIG. 3

FIG.4a

FIG.4b

FIG.4c

FIG. 5

t1

t2

gaz de refroidissement

déplacement de
la pompe

faisceau
de fibres
vehiculant
la pompe

miroir

évacuation du gaz
de refroidissement

barreau laser

miroir

FIG.6

EP 0 493 235 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | US-A-4 890 289 (S.BASU)<br>* colonne 2, ligne 45 - colonne 4, ligne 23; figures 1-7 * | 1-3,5,8 | H01S3/094<br>H01S3/042<br>H01S3/23 |
| Y | | 1,3,6,7, 9,10 | |
| | --- | | |
| Y | WO-A-9 016 099 (AUSTRALIAN ELECTRO-OPTICS PTY)<br><br>* page 7, ligne 7 - page 7, ligne 8; figures 1-7 *<br>* abrégé * | 1,3,6,7, 9,10 | |
| | --- | | |
| Y | US-A-4 922 502 (J.F.UNTERNAHRER ET AL.)<br>* colonne 4, ligne 15 - colonne 6, ligne 51; figures 2,3 * | 1,9,10 | |
| | ----- | | |

| DOMAINES TECHNIQUES RECHERCHES (Int. Cl.5 ) |
|---|
| H01S |

Le présent rapport a été établi pour toutes les revendications

| Lieu de la recherche | Date d'achèvement de la recherche | Examinateur |
|---|---|---|
| LA HAYE | 07 FEVRIER 1992 | MALIC K. |